**Europäisches Patentamt**

**European Patent Office**

**Office européen des brevets**

(19)

(11) Veröffentlichungsnummer: **0 204 934**
**B1**

(12) ## EUROPÄISCHE PATENTSCHRIFT

(45) Veröffentlichungstag der Patentschrift:
**21.09.88**

(51) Int. Cl.⁴: **F 16 L 23/00**

(21) Anmeldenummer: **86105616.6**

(22) Anmeldetag: **23.04.86**

(54) **Flanschring für Rohre.**

(30) Priorität: **02.05.85 DE 3515737**

(43) Veröffentlichungstag der Anmeldung:
**17.12.86 Patentblatt 86/51**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
**DE-A-2 434 160**
**NL-A-8 303 514**
**US-A-4 542 923**

(73) Patentinhaber: **METU- System Meinig KG, Seitinger Strasse 186, D-7201 Rietheim- Weilheim 2 (DE)**

(72) Erfinder: **Meinig, Manfred, D-7201 Rietheim-Weilheim 2 (DE)**

(74) Vertreter: **Patentanwälte Dipl.- Ing. Klaus Westphal Dr. rer. nat. Bernd Mussgnug Dr. rer.nat. Otto Buchner, Waldstrasse 33, D-7730 VS-Villingen (DE)**

EP 0 204 934 B1

## Beschreibung

Die Erfindung betrifft einen Flanschring nach dem Oberbegriff des Anspruchs 1.

Ein derartiger Flanschring ist aus der DE-C-3 143 893 bekannt. Er sitzt bei normaler Belastung völlig stabil im Rohrende, da der unter Vorspannung eingetriebene Ringsteg sich ausreichend stark an der Innenwand des Rohrs verspreizt. Treten jedoch starke Biegebelastungen auf, so kann es erwünscht sein, die Haltekraft des Flanschrings im Rohrende noch zu verstärken.

Durch die Erfindung soll eine solche zusätzliche Stabilisierung des Flanschrings im Rohrende erreicht werden.

Diese Aufgabe wird bei einem Flanschring der eingangs genannten Art erfindungsgemäß durch die kennzeichnenden Merkmale des Anspruchs 1 gelöst.

Die Haltekraft des Flanschrings im Rohrende kann dadurch praktisch verdoppelt werden. Herstellung und Montage des Flanschrings werden durch diese Maßnahmen jedoch nur unwesentlich komplizierter.

Der ringförmige Vorsprung kann entweder aus dem zweiten Schenkel nach außen gedrückt sein, so daß er von innen unter Vorspannung an der Rohrinnenwand anliegt. Nach einer bevorzugten Ausführungsform gemäß Anspruch 2 besteht er jedoch aus einem zweiten Ringsteg, der in der gleichen Weise abgewinkelt ist wie der erste Ringsteg und dessen Außenkante sich unter vorspannung gegen ein Herausziehen aus dem Rohr einspreizt.

Zur weiteren Verstärkung der Haltekraft des Flanschrings im Rohrende kann gemäß den Ansprüchen 3 und 4 der erste und/oder der zweite Ringsteg hinter je einem Kranz von Abstützvorsprüngen eingeschnappt werden, die von der Innenfläche des Rohrs nach innen stehen. Zweckmäßigerweise bestehen die Abstützvorsprünge aus Nocken, die aus der Rohrwand nach innen gedrückt sind.

Anhand der Figuren werden Ausführungsbeispiele der Erfindung näher erläutert. Es zeigt

Fig.1 einen axialen Teilschnitt durch ein Rohrende mit dem Flanschring vor dem Aufsetzen auf das Rohrende,

Fig.2 die in Fig. 1 gezeigten Teile nach dem Aufsetzen des Flanschrings und

Fig. 3 einen der Fig. 2 entsprechenden Teilschnitt mit einer zweiten Ausführungsform des Flanschrings.

Gleiche oder entsprechende Teile sind mit den gleichen Bezugszeichen bezeichnet wie im Hauptpatent.

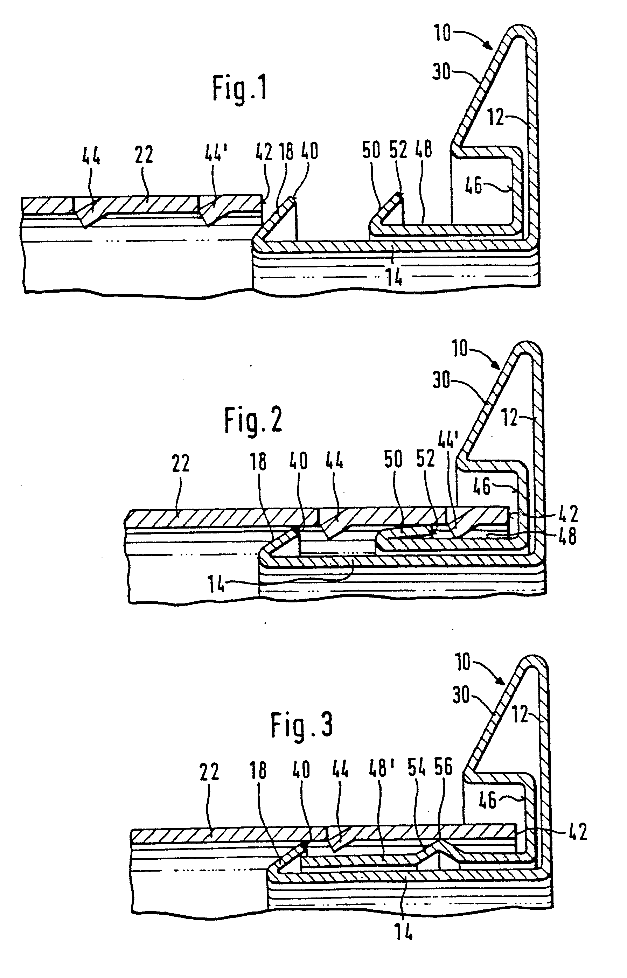

Der allgemein mit 10 bezeichnete Flanschring weist einen radialen Befestigungsflansch 12, einen etwa im rechten Winkel dazu, also etwa axial verlaufenden ersten Schenkel 14 und einen vom Schenkel 14 schräg nach außen zum Befestigungsflansch 12 hin abgewinkelten ersten Ringsteg 18 auf. In dem in Fig. 1 dargestellten unbelasteten Zustand des Flanschrings 10 ist der größte Durchmesser des ersten Ringstegs 18 an dessen Außenkante 40 größer als der Innendurchmesser des Rohrs 22, in dessen offenes Ende 42 der Flanschring 10 unter Vorspannung des ersten Ringstegs 18 eingetrieben werden soll, wie aus Fig. 2 ersichtlich.

Während des Eintreibens gleitet die Außenkante 40 längs der Innenwand des Rohrs 22, bis sie hinter einem Kranz von Abstützvorsprüngen 44 einschnappt, die in Form von Nocken aus der Wand des Rohrs 22 nach innen gedrückt sind. Durch die längere Ausführungsform des ersten Schenkels 14 ist die Toleranz des Abstandes der Abstützvorsprünge 44 vom offenen Rohrende 42 nicht besonders kritisch, was insbesondere bei ungenauem Abschneiden des Rohrs auf der Baustelle eine wesentliche Erleichterung darstellt.

Am äußeren Ende des Befestigungsflansches 12 ist ein zur gleichen axialen Seite wie der Schenkel 14 um mehr als 90° umgebogener Spannteil 30 vorgesehen, an dessen Ende zur besseren Versteifung des Flanschrings 10 ein am Befestigungsflansch 12 zur Anlage kommender Teil 46 anschließt, der wiederum in einen am ersten Schenkel 14 zur Anlage kommenden, einer zusätzlichen Versteifung dienenden zweiten Schenkel 48 übergeht. Vom zweiten Schenkel 48 geht ein schräg zum Befestigungsflansch 12 hin abgewinkelter zweiter Ringsteg 50 zum zusätzlichen Einspreizen an der Rohrinnenwand ähnlich wie der erste Ringsteg 18 aus. Der zweite Schenkel 48 ist bei dieser Ausführungsform kürzer ausgebildet als der erste Schenkel 14, so daß die Außenkante 52 des zweiten Ringstegs 50 außerhalb der Abstützvorsprünge 44 sich an der Innenwand des Rohrs 22 einspreizt. Es ist ein zweiter Kranz von Abstützvorsprüngen 44' vorgesehen, hinter denen die Außenkante 52 zur zusätzlichen Sicherung des Flanschrings 10 einschnappt.

Bei der Ausführungsform gemäß Fig. 3 sind die meisten Teile im wesentlichen gleich ausgebildet wie bei der in den Fig. 1 und 2 dargestellten Ausführungsform. Es werden daher die gleichen Bezugszeichen hierfür verwendet. Bei dieser Ausführungsform ist lediglich der zweite Schenkel 48 nahezu gleich lang ausgebildet wie der erste Schenkel 14 und liegt daher über nahezu die ganze Länge desselben versteifend an diesem an. Statt eines zweiten Ringstegs ist eine sich an der Rohrinnenwand abstützende, radial nach außen gedrückte Sicke 54 vorgesehen, deren Außenkante 56 sich beim Eintreiben in das offene Ende 42 des Rohrs 22 ebenfalls unter Vorspannung an der Innenwand des Rohrs 23 abstützt.

**Patentansprüche**

1. Auf ein dünnwandiges rundes Blechrohr aufsetzbarer einstückiger Flanschring zur Herstellung einer Stoßverbindung zwischen zwei Rohrabschnitten, mit einem etwa radial nach außen stehenden Befestigungsflansch einem vom inneren Ende des Befestigungsflansches abstehenden ersten Schenkel und einem vom ersten Schenkel ausgehenden, schräg nach außen zum Befestigungsflansch hin abgewinkelten ersten Ringsteg, wobei erster Schenkel und erster Ringsteg unter Vorspannung ins Rohrinnere eintreibbar sind, dadurch gekennzeichnet, daß der Flanschring (10) einen parallel am ersten Schenkel (14) anliegenden zweiten Schenkel (48, 48') aufweist, von dem ein ringförmiger Vorsprung (50, 54) nach außen steht, der unter Vorspannung ins Rohrinnere eintreibbar ist.

2. Flanschring nach Anspruch 1, dadurch gekennzeichnet, daß der ringförmige Vorsprung als zweiter Ringsteg (50) ausgebildet ist, der vom zweiten Schenkel (48) ausgeht und schräg nach außen zum Befestigungsflansch (12) hin abgewinkelt ist.

3. Flanschring nach Anspruch 1 oder 2, dadurch gekennzeichnet, daß die Außenkante (40) des ersten Ringstegs (18) hinter Abstützvorsprüngen (44) einschnappbar ist, die nahe dem Ende (42) des Blechrohrabschnitts (22) nach innen stehen.

4. Flanschring nach einem der vorangehenden Ansprüche, dadurch gekennzeichnet, daß die Außenkante (52) des zweiten Ringstegs (50) hinter Abstützvorsprüngen (44') einschnappbar ist, die nahe dem Ende (42) des Blechrohrabschnitts (22) nach innen stehen.

**Claims**

1. A one-piece flange ring which can be put on a thin-walled round metal tube to produce a butt joint between two sections of tube, comprising an attachment flange, projecting outwards approximately radially, with a first arm projecting from the inner end of the attachment flange and a first annular flange projecting obliquely from the first arm and bent down towards the attachment flange, whereby the first arm and the first annular flange can be driven, when compressed, into the inside of the tube characterized in that the flange ring (10) comprises a second arm (48, 48'), lying parallel against the first arm (14), on which second arm there is an annular outward projection (50, 54) which can be driven when compressed into the inside of the tube.

2. A flange ring according to Claim 1, characterized in that the annular projection is made as a second annular flange (50) which projects from the second arm (48) and is bent down towards the attachment flange (12).

3. A flange ring according to Claim 1 or 2, characterized in that the outer edge (40) of the first annular flange (18) can be snapped in behind bracing projections (44) which project inwards near the end (42) of the section of metal tube (22).

4. A flange ring according to any one of the preceding Claims, characterized in that the outer edge (52) of the second annular flange (50) can be snapped in behind bracing projections (44') which project inwards near the end (42) of the section of metal tube (22).

**Revendications**

1. Sur un anneau de bride monobloc pouvant être rapporté sur un tube de tôle mince cylindrique à paroi mince pour la réalisation d'une liaison bout à bout entre deux sections de tube, avec une bride de fixation se trouvant vers l'extérieur pratiquement radiale, une première branche allant en s'écartant de l'extrémité intérieure de la bride de fixation et d'un premier gradin annulaire partant de la première branche inclinée, repliée en U vers l'extérieur par rapport à la bride de fixation, une première branche et un premier gradin annulaire peuvent être introduits à l'intérieur du tube par précontrainte, caractérisé en ce que l'anneau de bride (10) comporte une seconde branche (48, 48') parallèle se trouvant sur une première branche (14) à partir de laquelle se tient vers l'extérieur une saillie annulaire (50, 54) qui peut s'introduire par la saillie à l'intérieur du tube.

2. Anneau de bride selon la revendication 1, caractérisé en ce que la saillie annulaire est sous forme d'un second gradin annulaire (50) qui fait saillie de la seconde branche (48) et est recourbé en forme de U vers l'extérieur par rapport à la bride de fixation (12).

3. Anneau de bride selon la revendication 1 ou la revendication 2, caractérisé en ce que la brodure extérieure (40) du premier gradin annulaire (18) peut être sertie à l'arrière des saillies d'appui (44) et se situe vers l'intérieur au voisinage de l'extrémité (42) de la section (22) du tube de tôle.

4. Anneau de bride selon l'une des revendications précédentes, caractérisé en ce que la bordure extérieure (52) du second gradin annulaire (50) peut être sertie à l'arrière des saillies d'appui (44'), qui se tiennent vers l'arrière au voisinage de l'extrémité (42) de la section de tube (22).

Fig.1

Fig.2

Fig.3